# EUROPEAN PATENT APPLICATION

(11) **EP 2 680 214 A1**
(43) Date of publication of application: **01.01.2014**
(21) Application number: 13003011.7
(22) Date of filing: 12.06.2013
(51) Int. Cl.: G06Q 40/06

(54) **Adaptive in-memory customer and customer account classification**

(30) Priority: 29.06.2012 US 201213538002
(71) Applicant: SAP AG, 69190 Walldorf (DE)
(72) Inventor: Cao, Jordan (Zhibin), 69190 Walldorf (DE); Malov, Denis, 69190 Walldorf (DE)
(74) Representative: Müller-Boré & Partner Patentanwälte

(57) **Abstract**

Various embodiments herein include at least one of systems, methods, and software for adaptive in-memory customer and customer account classification. Some such embodiments include receiving a rule identifying data attributes that contribute to at least one outcome with regard to at least one product and applying the rule to a dataset replicated from a transactional data environment to an in-memory data environment. Application of the rule results in segmentation of at least one of customers and customer accounts likely to have each of the at least one outcomes, the replicated dataset including customer data. Such embodiments may then output data representative of the segmented at least one of customers and customer accounts likely to have each of the at least one outcomes. The in some embodiments, the rule is applied to define a further rule which may be stored and later utilized to perform further data segmentation.

## Description

### BACKGROUND INFORMATION

High volumes of data are routinely collected in corporate and government databases. In financial services industries, the large amounts of data can provide great insights into customer behaviors. Previous efforts to use such data have led to credit scores and data processing solutions to determine interest rates. However, these efforts provide very narrow and inflexible solutions based on limited amounts of data sets which are typically quite large.

### BRIEF DESCRIPTION OF THE DRAWINGS

FIG. 1 is a block diagram of a data processing environment, according to an example embodiment.

FIG. 2 is an architectural illustration of a system, according to an example embodiment.

FIG. 3 is a block flow diagram of a method according to an example embodiment.

FIG. 4 is a block flow diagram of a method according to an example embodiment.

FIG. 5 is a block diagram of a computing device, according to an example embodiment.

FIG. 6 is a block flow diagram of a method according to an example embodiment.

FIG. 7 is a user interface illustration, according to an example embodiment.

FIG. 8 is a model illustration according to an example embodiment.

### DETAILED DESCRIPTION

As mentioned above, high volumes of data are routinely collected in corporate and government databases. This data presents significant business opportunities and competitive advantages through effective data management and transformation into business insights and intelligence. Businesses are thirsty for strategic insight for dealing with unexpected market changes, heightened competition, partnership challenges and opportunities, and increasing globalization. Yet despite an abundance of data to support strategic decisions, the reality is that executives are often overwhelmed by unwieldy amounts of information, or worse, out-of-date or misleading data that can yield suboptimal conclusions. It is a well-acknowledged fact that companies and industries are continuously dedicating larger amounts of their information technology budgets to databases, business intelligence, and reporting tools. However, the current marketplace is filled with numerous vendors and providers that focus on industry-specific, often niche-type applications and tools that have limited utility across broader markets.

On the other side, business users are facing multiple challenges in making decisions regarding technology and tools that often produced results disconnected through organizational silos and contribute to ever increasing costs of information sharing and business justification of continuous investments. In overcoming many such issues, various embodiments herein include data management and business intelligence solutions that emphasize real-time analytics propelled by fast access storage of in-memory databases.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to limit the scope of this application to any single invention or inventive concept if more than one is in fact disclosed. The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

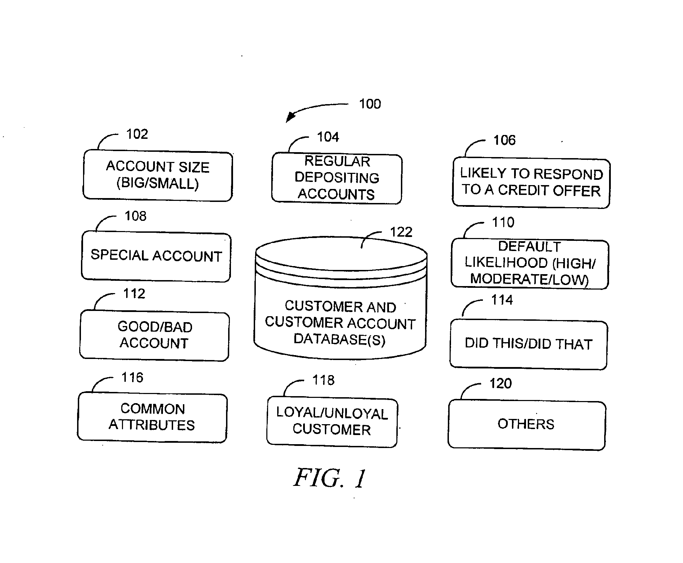

FIG. 1 is a block diagram of a data processing environment 100, according to an example embodiment. The data processing environment 100 provides a simplified view of at least one customer and customer account database 122 and customer and customer account analytical processes 102, 104, 106, 108, 110, 112, 114, 116, 118, 120. The customer and customer account analytical processes 102, 104, 106, 108, 110, 112, 114, 116, 118, 120 are generally statistical modeling processes that may be applied by a processor-executed process to segment at least one of customers and customer accounts represented in data stored in the at least one customer and customer account database 122.

In some embodiments, at least one statistical modeling process may exist or be defined to model historic data from which further statistical modeling processes may be based. For example, data representative of a desired outcome may be provided to such a statistical modeling process along with a desired statistical correlation or other factor and the statistical modeling process may identify other data indicators statistically related thereto from which a rule can be derived to segment other customers or customer accounts. A more specific example is a desire to identify customers having a near-term need for a home equity line-of-credit. The input may be to identify customers that have opened a home equity line-of-credit account and a desired statistical correlation of 75% to other data in a six-month period prior to opening the home equity line-of-credit account. The result of this exercise may reveal that customers opening a home equity line-of-credit account commonly do so within six-months within opening of a minor-child savings account. While this example is rather simple, it is illustrative of a statistical discovery from which a rule may be defined, stored, and applied in segmenting customers and customer accounts. Once segmented, the customers and customer accounts segments can be utilized for various purposes, such as marketing, default prevention, education, and account reviews.

The customer and customer account analytical processes 102, 104, 106, 108, 110, 112, 114, 116, 118, 120 may not only be based on statistical discoveries in data, but may also be input by users, included with a purchased software solution, and purchased or otherwise obtained as system 100 add-ons. Some such analytical processes may be based on key performance indicators (KPIs) or industry standards. Other analytical processes may be based on institutional or individual employee knowledge, experience, and intuition.

As illustrated, the analytical processes include analytical processes to segment customers or customer accounts by account size 102, regular depositing accounts 104, customers likely to respond to a credit offer 106, special account 108, default likelihood 110, and good and bad accounts 112, however good and bad may be defined by a particular organization. Other analytical processes may include a "did this/did that" 114 analysis that segments historic data of customers to identify likely future behaviors of other customers. In some embodiments, one analytic process may segment customers or customer accounts based on common attributes 116 there between, segment customers based on customer loyalty factors 118, and other such processes 120.

In financial service markets, software products have been designed for precise marketing purposes that fail to differentiate between customer groups. However, undifferentiated marketing is typically unsuccessful in financial services markets. For example, a good strategy decision for one customer group can be totally wrong if the targeted customer group is changed. Precision marketing can be a harbinger of success, especially in the banking field where financial products often have more dependence to customer attributes. At the same time, it is challenging for financial companies to identify, group, and understand their customers to allow for precision marketing.

Moreover, as time passes, customer groups can merge, split, and appear or disappear, as customer identification and grouping tasks are neither a one-time nor a periodic task. Instead, in some embodiments provided herein, customer identification and grouping, to be the most accurate and useful, is performed on a real-time or near real-time basis at or relatively close in time to when the identification and grouping is to be utilized. To accomplish real-time or near real-time customer identification and grouping, various embodiments include a high-performance run-time customer classification tool that performs analysis according to one or more of the analytical processes 102, 104, 106, 108, 110, 112, 114, 116, 118, 120 to discover customer and customer account segments and segmenting rules. Classification is also referred to herein as segmenting, segmentation, and other forms of the word "segment." Unless explicitly stated otherwise, classification and segmentation are intended as synonyms. Some such embodiments include a systematic approach towards utilization of financial services transactional data with applications to account classifications. Such embodiments utilize a unique, systematic approach of information management and scalability to manage large amounts of data.

Many modern banks process and maintain millions of accounts. Accounts can be categorized into multiple groups or classes through combinations of business and customer attributes. Some attributes defining types of the accounts can be considered static through the life of the account; others such as balances or maturities are dynamic and change in time. Multiple business units and people having different roles within banks have responsibilities for different functions and business scenarios associated with account management. For example, a risk management department typically focuses their effort on identification of risk-related indicators such as delinquency roll rates, probabilities of default, loss associated with adverse events, and the like. A marketing department typically is interested in product cross-selling and improving customer retention rates. A portfolio manager is typically responsible for portfolio growth and focuses on identification of accounts with high growth potential. While an account can keep the same structure and data content, classification of the account can be different for different business scenarios, such as may be defined and utilized by different departments and roles within an institution. Classification of the account can also change over time for various reasons, such as changing account balances, changing economic conditions, changing business rules, and the like.

Transaction-level account data provides opportunities for learning, statistical inference, and performance optimization. Previous processes for account classification involved lengthy steps of segmentation, attribute and parameter selections, model testing and validation, and monitoring. These steps can be very expensive and work intensive processes that have to be frequently repeated in order to adjust for new information coming into the system. When working with such large amounts of data, intermediate steps of data staging and aggregations, time intensive Extract Transform Load (ETL) operations, and multiple passes of analytical queries that create challenges in balancing between analysis flexibility and performance. As a result, customer and customer account segmenting use has been limited.

The analytical processes 102, 104, 106, 108, 110, 112, 114, 116, 118, 120 in the various embodiments leverage data replicated by at least one data replication process into at least one in-memory database for dynamic classification of accounts that can be performed on-demand based on a system of business rules and business scenarios. For example, sales representatives or accounts managers may care about account balances and numbers of trades that directly impact their commissions. The sales representatives or accounts managers might be interested in classifications directly incorporating their primary KPIs such as number of trades and account size.

From another perspective, risk analysts might be interested in earlier identification of delinquent accounts through pattern recognition that can be evaluated from the historical transactions. Risk managers, and others may defme segmentation rules in the analytical processes 102, 104, 106, 108, 110, 112, 114, 116, 118, 120 based on complex rules that involve machine-learning algorithms such as neural networks, K-means, Bayesian classifiers, among other statistical techniques based on the analysis to be performed.

Such segmentation rules are utilized herein to define how customers and customer accounts, or other items, are classified and grouped. To better classify such items, common purposes for different rules can be considered as follows:
1. Classify: Classification belongs to the prediction model. It is used to predict the user types. For example, in a credit system for people who do not yet have a credit score, they can be classified into different groups based on historical transaction or behaviors. This type of rule can be discovered through statistical analysis of historic data sampling to identify typical symptoms, or contributors, for each group.
2. Clustering: Different from classification, clustering is a non-prediction model. It explains how to group existing customers and accounts.
3. Association: this model is also a non-prediction model. Association studies the relationships among customers and accounts. For example, a customer who buys a product A has higher possibility to buy the product B and C. Through identifying, the internal relationship of customer behavior or even the customer attributes is helpful in fully understanding the customer.

The rule descriptions for the three type usages are typically different. For example, quite often classifications may be based on a set of "if-then" rules that utilize quick production of subsets of accounts satisfying combinations of the rules. For example, to identify a good candidate for line increase on an account, a user is searching for accounts with utilization ratios exceeding certain cut-off values and Loan to Value (LTV) values less than certain cut -off values, e.g. LTV<50% and Utilization>80%.

In general, a variety of formats may be supported to allow for effective applications of decision trees algorithms, such as a C4.5 algorithm. For these cases, the classification functions are typically represented by ranges or discrete values of the attributes, and combinations thereof. Such as:

| IF-THEN Rule Types |
|---|
| Attribute *BIGGER THAN* value |
| Attribute *NOT LESS THAN* value |
| Attribute LESS THAN value |
| Attribute *NOT BIGGER THAN value* |
| Attribute *BETWEEN* value i *AND* value 2 |
| Attribute LIKE"String Pattern" |
| Attribute *IN value* set |
| Attribute *EQUAL* value |
| Attribute *NOT EQUAL value* |

Of course, the problems of classifications would be straightforward if users always knew the attribute combinations and values that need to be satisfied by classes of interest. However, this is often not the case. Quite often users need to learn the rules first before they can apply them to the segmentations. For example, a credit score associated with an account represents estimated probabilities of default. As such, a risk manager can use credit scores directly for account classifications for default rates estimates. However, imagine that a credit score is not available for the account. In this, the risk manger may desire to build a classification for default rates from available attributes by "learning" how different attribute values and ranges effect default rates. These types of classifications are more complex and utilize advanced learning algorithms such as regression methods, time series modeling, neural networks, K-means, K-nearest neighbor, Bayesian classifiers, and the like. In some embodiments, once contributing attributes for segmenting particular desired outcomes or classifications are identified, rules can be generated therefrom.

Thus, the various embodiments herein, through defining, discovery, and application of the analytical processes 102, 104, 106, 108, 110, 112, 114, 116, 118, 120 and the rules therein, a flexible methodology and system for in-memory intelligent adaptive account classifications, is provided. Within these embodiments, users can select, evaluate, visualize results, adapt, or change the classification algorithms on-demand in order to achieve real time analysis and decision support for a variety of business roles.

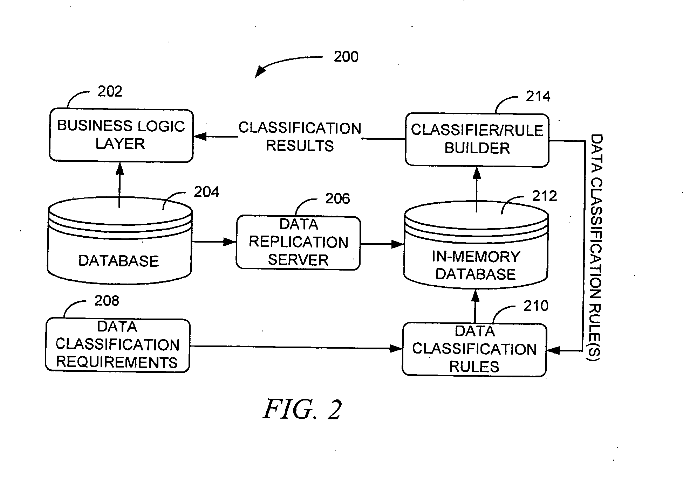

FIG. 2 is an architectural illustration of a system 200, according to an example embodiment. The system 200 includes a database 204 that stores data of a larger software system, such as an Enterprise Resource Planning (ERP), Customer Relationship Management (CRM), or other software system. The system 200 also includes a business logic layer 202 and data classification requirements 208 which are also typically, although not necessarily, components of the larger software system.

The system 200 also includes an in-memory database 212 that stores data replicated from the database 204 by a data replication server 206. In some embodiments, the in-memory database 212 stores transactional data in a large bank of random access memory (RAM). Note however that other forms of memory may be utilized in various embodiments. One such other memory type is Flash memory. In some such embodiments, the data stored in RAM may also be stored on disk to allow the RAM to be quickly loaded, such as on a system reset or power-on event. In other embodiments, the in-memory database 212 may store the replicated data primarily on disk. Such embodiments can• still provide very quick access to data as the data replicated to the in-memory database 212 may be replicated from a plurality of databases 204. By replicating the data from multiple databases 204 to the single in-memory database 212, the multiple databases 204 need not be queried thereby eliminating multiple transactions, which each may present a processing bottleneck. Further, some such embodiments may replicate only select portions of data from a larger database and include different indexes than the larger database. Thus, performance is enhanced with regard to data access in the various embodiments in multiple ways through the implementation of RAM, Flash, or other memory types and consolidation of data of interest through replication to a single database.

The data replication server 206 replicates data to the in-memory database 212 according to data identified in at least one of the data classification requirements 208 and data classification rules 210. In some embodiments, the data replication server 206 is representative of one or more processes of an Online Transaction Processing (OLTP) system. In a typical embodiment, the data classification rules 210 are the analytical processes 102, 104, 106, 108, 110, 112, 114, 116, 118, 120 as illustrated and described above with regard to FIG. 1. The data classification rules 210 may be generated based on the data classification requirements 208, based on KPI's, as input by a user, as discovered by application of one or more data classification rules 210 that output a data classification rule or component thereof, and other sources.

The data classification rules 210 are typically applied against data replicated by the data replication server 206 into the in-memory database 212. The data classification rules 210 are applied by the classifier/rule builder 214. The classifier/rule builder 214 performs analysis on data replicated to the in-memory database 212 according to one or more of the data classification rules 210. The result of the analysis, when the applied one or more data classification rules 210 is a rule, which may be a further data classification rule that may then be stored with the other data classification rules 210. In other instances, the classifier/rule builder 214 may apply one more data classification rules 210 that segment customers or customer accounts. Data representative of the resultant customer or customer account segments may be stored in the in-memory database 212, in the database 204, output to the business logic layer 202 such as for generation of targeted marketing materials based thereon, stored to a file, and the like.

However, it is possible in some embodiments that when the classifier/rule builder 214 applies a data classification rule, not all the needed data will have been replicated into the in-memory database 212. In such instances, the data replication server 206 may be called to replicate the needed data before the rule is applied. In other instances, the classifier/rule builder 214 may directly access the database 204 to obtain the needed data. The data replication server 206 may also receive a message indicating the needed data is to be replicated in the future according to its data replication logic 206. A goal in replicating the data to the in-memory database 212 is not only to access the data from a database having very quick retrieval times, but also to reduce a number of different data sources from which data is to be retrieved. Thus, as mentioned above, the database 204 as illustrated represents one or more databases. As a result, when the database 204 is two or more databases, the in-memory database 212 may store data replicated from each of the two or more databases thereby reducing the time needed to service a data request from the classifier/rule builder 214 based on one or more data classification rules 210. Further, as the system 200, and in particular the data replication server 206, is an OLTP implementation, as data in the database 204 is modified, the data replicated to the in-memory database 212 is also updated in real-time, or near real-time. This allows the classifier/rule builder 214 to perform analysis according to the data classification rules 210 that is very current. Additionally, when data is updated in the in-memory database 212, in some embodiments, the classifier/rule builder 214 may reapply one or more data classification rules 210 that contemplate the updated data to ensure the analysis based thereon is up to date.

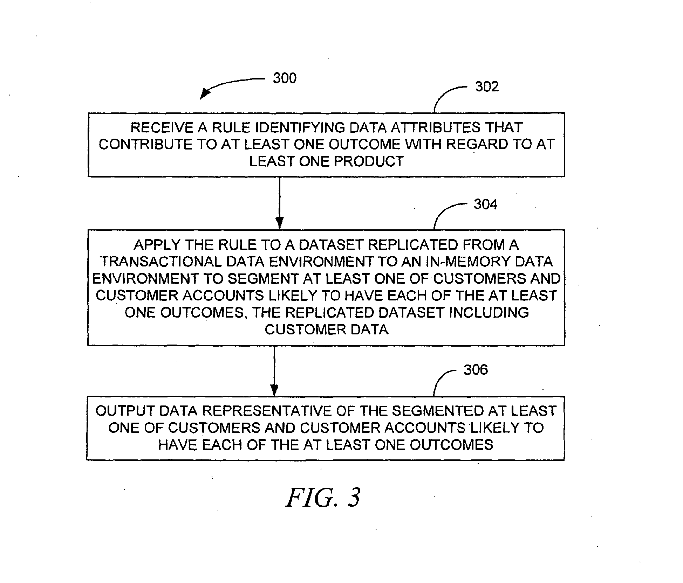

FIG. 3 is a block flow diagram of a method 300 according to an example embodiment. The method 300 is an example embodiment of performing an analytical process 102, 104, 106, 108, 110, 112, 114, 116, 118, 120 as described above with regard to FIG. 1 in applying a data classification rule 210 of FIG. 2. The method 300 may be performed by a processing engine, such as the classifier/rule builder 214, against data stored in an in-memory database, such as in-memory database 212 of FIG. 2.

The method 300 includes receiving 302 a rule identifying data attributes that contribute to at least one outcome with regard to at least one product. The method 300 may then apply 304 the rule to a dataset replicated from a transactional data environment to an in-memory data environment to segment at least one of customers and customer accounts likely to have each of the at least one outcomes. Next the method 300 outputs 306 data representative of the segmented at least one of customers and customer accounts likely to have each of the at least one outcomes. The data output 306 may be to one or more of numerous locations, such as a CRM or ERP process, a database, a file, or other destination.

In some embodiments, the received 302 and applied 304 rule comprises a plurality of rules that are utilized to perform the segmentation.

Some embodiments of the method 300 may further include providing data identifying attributes of interest to a data replication process that replicates data from the transactional data environment to the in-memory data environment. The data identifying attributes of interest causes the data replication process to replicate data of the attributes of interest into the in-memory data environment. The attributes of interest in such embodiments are typically data items identified in the received 302 rule or other rules.

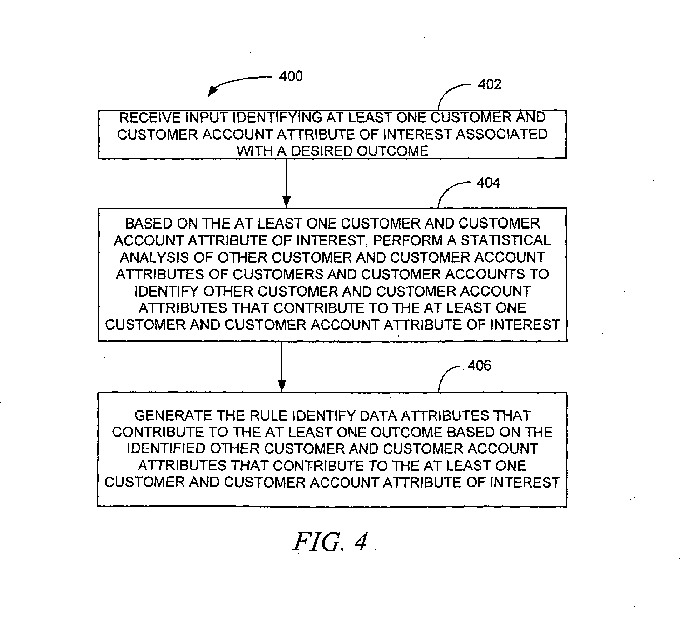

FIG. 4 is a block flow diagram of a method 400 according to an example embodiment. The method 400 is an example embodiment of performing an analytical processes 102, 104, 106, 108, 110, 112, 114, 116, 118, 120 as described above with regard to FIG. 1 in applying a data classification rule 210 of FIG. 2 for purposes of identifying contributing data attributes for segmenting customers or customer accounts. The method 400 may be performed by a processing engine such as the classifier/rule building 214 against data stored in an in-memory database, such as in-memory database 212 of FIG. 2.

The method 400 includes receiving 402 input identifying at least one of a customer and a customer account attribute of interest. The at least one of a customer and a customer account attribute of interest are typically associated with a desired outcome, such as an opening of an account, a large deposit, a loan account default, or other outcome. Based on the at least one of the customer and the customer account attribute of interest, performing 404 a statistical analysis of other customer and customer account attributes of customers and customer accounts to identify other customer and customer account attributes that contribute to the at least one customer and customer account attribute of interest. In some embodiments, performing 404 the statistical analysis may include performing 404 more than one statistical analysis method. The method 400 may then generate 406 the rule identifying data attributes that contribute to at least one outcome based on the identified other customer and customer account attributes that contribute to the at least one customer and customer account attribute of interest. The generated 406 rule may then be presented to a user for evaluation, stored for later application, or applied to customer or customer account data to segment the data.

In some embodiments, the received 402 input identifying the at least one customer and customer account attribute of interest includes a time component identifying a window of occurrence with regard to the other customer and customer account attributes and the at least one customer and customer account attribute of interest. For example, the time limit may specify a period of data to consider in segmenting accounts based on a likelihood of default or likelihood of another event such as an opening of a minor-child savings account, a home equity line of credit, or a closing of an account.

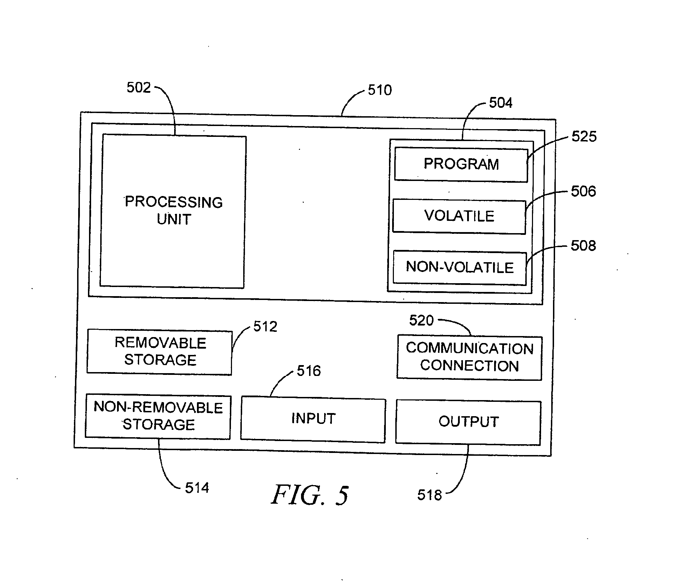

FIG. 5 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components. One example-computing device in the form of a computer 510, may include a processing unit 502, memory 504, removable storage 512, and non-removable storage 514. Memory 504 may include volatile memory 506 and non-volatile memory 508. Computer 510 may include - or have access to a computing environment that includes - a variety of computer-readable media, such as volatile memory 506 and non-volatile memory 508, removable storage 512 and non-removable storage 514. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 510 may include or have access to a computing environment that includes input 516, output 518, and a communication connection 520. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 502 of the computer 510. A hard drive, CD-ROM, and RAM are some examples of articles including a non-transitory computer-readable medium. For example, a computer program 525 capable of performing one or more methods as described herein, or a portion thereof.

For example, one such embodiment is in the form of a system including at least one processor, at least one memory device, and at least one network interface device. The system of this embodiment includes a rule repository storing rules, in the at least one memory device, each stored rule identifying data attributes that contribute to at least one outcome with regard to at least one product. The system also includes an in-memory database accessible via the at least one network interface device, the in-memory database storing data replicated from a transaction data environment, the replicated data including data representative of the data attributes identified in at least one rule stored in the rule repository. The system further includes a rule application module stored in the at least one memory device and executable by the at least one processor to perform a variety of functions.

The functions performed by the rule application module may include receiving a selection of a rule from the rule repository to be applied and applying the selected rule to data stored in the in-memory database. Applying the rule causes the rule application module to segment at least one of customers and customer accounts likely to have each of the at least one outcomes with regard to at least one product of the applied rule. The rule application module may then output data representative of the segmented at least one of customers and customer accounts likely to have each of the at least one outcomes of the applied rule.

Some embodiments of the system may also include a rule generation module stored in the at least one memory device and executable by the at least one processor. The rule generation module, when executed, receives input identifying at least of a one customer and a customer account attribute of interest. Then, based on the at least one customer and customer account attribute of interest, the rule generation module performs a statistical analysis of other customer and customer account attributes of customers and customer accounts to identify other customer and customer account attributes that contribute to the at least one customer and customer account attribute of interest. The rule generation module then generates, and stored in the rule repository, the rule identifying data attributes that contribute to the at least one outcome with regard to the at least one product based on the identified other customer and customer account attributes that contribute to the at least one customer and customer account attribute of interest.

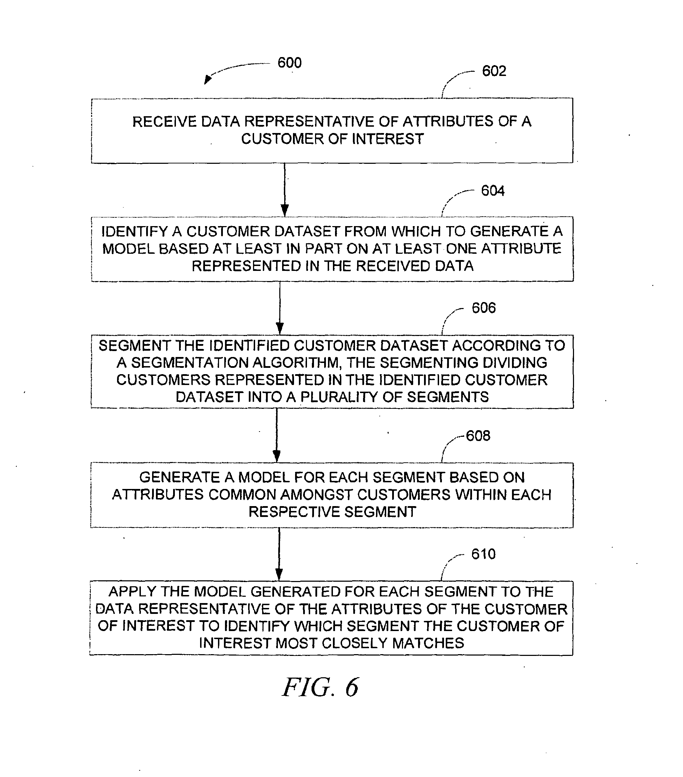

FIG. 6 is a block flow diagram of a method 600 according to an example embodiment. The method 600 is a further example of a method that may be rapidly performed to classify one or a plurality of customers of interest. In the illustrated example, the method 600 includes receiving 602 data representative of attributes of a customer of interest. Receiving 602 the data may include receiving data as input, retrieving data from a database such as in response to a triggering event, or otherwise obtaining data.

The method 600 may then identify 604 a customer dataset from which to generate a model based at least in part on at least one attribute represented in the received data representative of the attributes of the customer of interest. The customer dataset typically includes data identified in an in-memory database, such as the in-memory database of FIG. 2. However, in some embodiments, identified data may be data obtained from other sources, which may or may not be present in the in-memory database or other local database. Instead, some data may be sourced from other sources or replicated into an in-memory database from other sources. Such other sources may include public data representative of economic conditions, market rates, commodity and security (stocks, bonds, derivative, futures, options, etc.) prices and pricing trends, and other such data.

In some embodiments, identifying 604 the customer dataset may further include a determination of whether the dataset is likely to yield a statistically significant model. Such a determination may consider an amount of identified data, periods to which the data pertains, and other such considerations. Variables with regard to the dataset may then be modified when the identified 604 dataset is determined to lack statistical significance. Such variables may include excluding data over certain periods, such as economic data representative of periods of recession. Such variable may also include broadening a date range or geographic area of considered data add to an amount of data from which segmentation 606 and model generation 608 will be performed. Through modification of such variables, the identified 604 dataset is more likely to have statistical significance and is less likely to include data that may skew the segmenting 606 and generated 608 model.

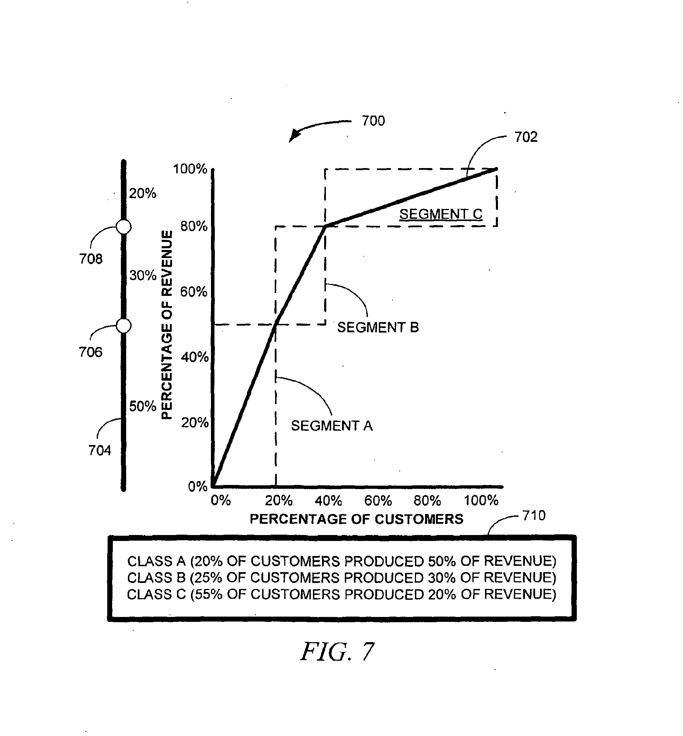

The method 600 further includes segmenting 606 the identified customer dataset according to a segmentation algorithm to divide customers represented in the identified customer dataset into a plurality of segments. The segmenting 606 may be performed according to any number of algorithms. For example, the segmenting 606 may be performed according to an ABC segmentation algorithm. An example of an ABC segmentation algorithm and a user interface within which the algorithm boundaries may be modified is illustrated and will be discussed with regard to FIG. 7. Generally, the ABC segmentation algorithm will typically segment customers or customer accounts into groups, such as groups of customers that generate certain portions of revenue or profit.

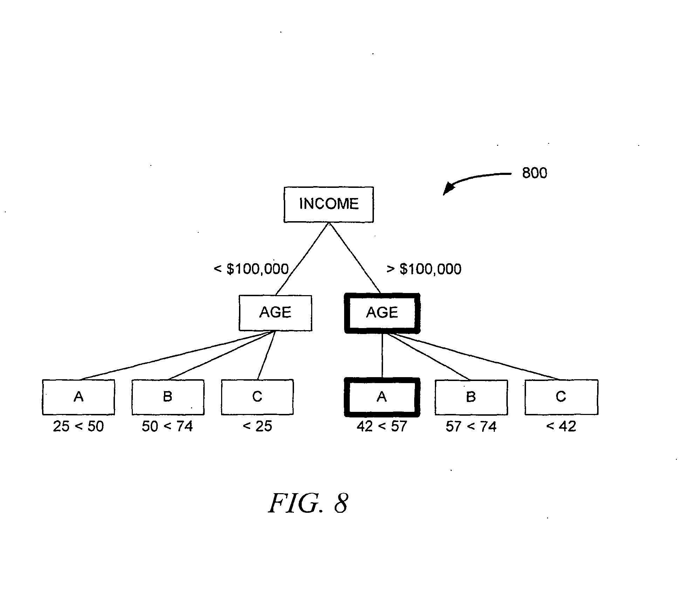

Returning to FIG. 6, the method 600 further includes generating 608 a model for each segment based on attributes common amongst customers within each respective segment. An example model-generating algorithm that may be applied in some embodiments to generate 608 the model, or models, is a C4.5 algorithm that generates a decision tree. An example of a decision tree that may be generated according to a C4.5 algorithm is illustrated and described supra with regard to FIG. 8.

The method 600 further includes applying 610 the model generated for each segment to the data representative of the attributes of the customer of interest to identify which segment the customer of interest most closely matches. Based on the match, some embodiments of the method 600 may further include providing a recommendation to the customer of interest based on the identified segment the customer most closely matches. The recommendation may first be provided to a customer service agent that relays the recommendation from a system performing the method. In other embodiments, the recommendation may be provided to the customer via an online or interactive voice response system through which the customer may have requested the recommendation or is otherwise accessing information through which the recommendation may be provided.

In some embodiments of the method 600, receiving 602 data representative of attributes of the customer interest may include receiving a financial services product recommendation request with regard to an identifier of the customer of interest. The method 600 in such embodiments may then retrieve the data representative of the attributes of the customer of interest from a customer database based at least in part on the identifier of the customer of interest, followed by performance of the remaining method 600 elements.

Some additional embodiments may include a recursive application of the method 600 to not only identify which segment the customer of interest most closely matches and making a product recommendation therefrom, but also determining a value for a variable with regard to the recommended product. For example, the method 600 may be applied to identify a product, such as a home loan program, of likely customer interest. The identified product may have a variable pricing element, such as an interest rate component. In such embodiments, the method 600 may be applied to identify a product of likely interest to the customer based on the identified segment. The method 600 may then be reapplied to identify a variable pricing element value of likely customer interest. Such embodiments may include identifying a further customer dataset from which to generate a model based at least in part on at least one attribute represented in the received data representative of the attributes of the customer of interest and at least one attribute of the product of interest. The method may then segment the identified second customer dataset according to the segmentation algorithm to divide customers of represented in the identified second customer dataset into a plurality of segments. Next, a product pricing model may be generated for each segment based on attributes common amongst customers within each respective segment, each segment associated with at least one product of likely interest variable pricing element value. The product pricing model may then be applied to the data representative of the attributes of the customer of interest to identify which segment the customer of interest most closely matches. This further application of the method 600 may then output data representative of the identified product of likely interest and the identified variable pricing element value.

FIG. 7 is a user interface 700 illustration, according to an example embodiment. The user interface 700 is an example of a tool that may be utilized to visualize how an identified dataset may be segmented prior to model generation based on the identified dataset. For example, the user interface 700 may be utilized during performance of or for configuring the segmenting 606 of the method 600 illustrated and described with regard to FIG. 6.

The user interface 700 includes a graph of "PERCENT OF CUSTOMERS" in view of a "PERCENTAGE OF REVENUE" the corresponding customer percentages generate. • This graph is generated based on customer revenue data in view of a total amount of customer revenue of an organization. The user interface includes a slider bar 704 having two sliders 706, 708. The sliders 706, 708 may be adjusted on the slider bar 704 to locations that equate with the "PERCENTAGE OF REVENUE" axis of the graph. The corresponding percentages associated with each of the sliders 706, 708 are segmentation points for parsing customers when performing segmentation, such as may be performed according to an ABC Segmentation algorithm. As the sliders 706, 708 are adjusted, the plotted data in the graph will be segmented and the segments will be illustrated. Summary data may also be provided in the user interface 700, such as in summary box 710.

The segmenting performed in the user interface 700 may be used to assist an organization in identifying individual customers that most important in contributing to revenue. Customers in the illustrated SEGMENT A are only 20% of all customers, yet contribute 50% of total customer revenue. Based on this segmenting, a model may then be generated, such as according to the generating 608 illustrated and described with regard to FIG. 6, to use in determining what customer segment a prospective customer may fall into. This information may then be utilized in making marketing decisions as a prospective customer that is likely to be a Class A customer will merit more marketing effort than a customer in another class.

FIG. 8 is a model 800 illustration according to an example embodiment. The model 800 is a simple example of a decision tree model that may be generated following segmentation, such as is illustrated in the user interface 700 FIG. 7. The decision tree model, in some embodiments, is generated according to a C4.5 algorithm.

As illustrated, during generation of the model 800 in view of the customer segments Class A, Class B, and Class C of FIG. 7, two data attributes were discovered with regard to customers that contribute to their classification into their respective segments. These data attributes are income and age. This decision tree model 800 may then be utilized either programmatically or by a human to classify others, such as when conferring with a prospective customer. Should the prospective customer have income greater than $100,000 and be 45 years old, the prospective customer is likely to be a Class A customer. This path is indicated in the model 800 by the bold-lined boxes. Should the prospective customer have other attributes, the outcome may be different.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A computer-implemented method comprising:
receiving a rule identifying data attributes that contribute to at least one outcome with regard to at least one product;
applying the rule to a dataset replicated from a transactional data environment to an in-memory data environment to segment at least one of customers and customer accounts likely to have each of the at least one outcomes, the replicated dataset including customer data; and
outputting data representative of the segmented at least one of customers and customer accounts likely to have each of the at least one outcomes.

2. The method of claim 1, further comprising:
receiving input identifying at least of a one customer and a customer account attribute of interest;
based on the at least one customer and customer account attribute of interest, performing a statistical analysis of other customer and customer account attributes of customers and customer accounts to identify other customer and customer account attributes that contribute to the at least one customer and customer account attribute of interest; and
generating the rule identifying data attributes that contribute to the at least one outcome with regard to the at least one product based on the identified other customer and customer account attributes that contribute to the at least one customer and customer account attribute of interest.

3. The method of claim 2, wherein the input identifying the at least one customer and customer account attribute of interest includes a time component identifying a window of occurrence with regard to the other customer and customer account attributes and the at least one customer and customer account attribute of interest; and/or wherein performing the statistical analysis includes performing at least two statistical analysis methods.

4. The method of any one of the preceding claims, wherein the rule identifying data attributes that contribute to the at least one outcome with regard to the at least one product comprises a plurality of rules; and/or wherein the data representative of the segmented at least one of customers and
customer accounts are output to a customer relationship management process.

5. The method of any one of the preceding claims, further comprising:
providing data identifying attributes of interest to a data replication process that replicates data from the transactional data environment to the in-memory data environment to cause the data replication process to replicate data of the attributes of interest in the in-memory data environment, the attributes of interest being data items identified in the received rule.

6. A system comprising:
at least one processor, at least one memory device, and at least one network interface device;
a rule repository storing rules, in the at least one memory device, each stored rule identifying data attributes that contribute to at least one outcome with regard to at least one product;
an in-memory database accessible via the at least one network interface device, the in-memory database storing data replicated from a transaction data environment, the replicated data including data representative of the data attributes identified in at least one rule stored in the rule repository; and
a rule application module stored in the at least one memory device and executable by the at least one processor to:
receive a selection of a rule from the rule repository to be applied;
apply the selected rule to data stored in the in-memory database to segment at least one of customers and customer accounts likely to have each of the at least one outcomes with regard to at least one product of the applied rule; and
output data representative of the segmented at least one of customers and customer accounts likely to have each of the at least one outcomes of the applied rule.

7. The system of claim 6, further comprising:
a rule generation module stored in the at least one memory device and executable by the at least one processor to:
receive input identifying at least one of a customer and a customer account attribute of interest;
based on the at least one of the customer and customer account attribute of interest, perform a statistical analysis of other customer and customer account attributes of customers and customer accounts to identify other customer and customer account attributes that contribute to the at least one customer and customer account attribute of interest;
generate the rule identifying data attributes that contribute to the at least one outcome with regard to the at least one product based on the identified other customer and customer account attributes that contribute to the at least one customer and customer account attribute of interest; and
store the generated rule in the rule repository.

8. The system of claim 7, wherein the statistical analysis is performed against data replicated in the in-memory database; and/or wherein the input identifying the at least one customer and customer account attribute of interest includes a time component identifying a window of occurrence with regard to the other customer and customer account attributes and the at least one customer and customer account attribute of interest.

9. The system of any one of claims 6 to 8, wherein at least one rule identifying data attributes that contribute to the at least one outcome with regard to the at least one product comprises a plurality of rules; and/or wherein outputting the data representative of the segmented at least one of customers and customer accounts of interest includes storing the data on the at least one memory device.

10. The system of any one of claims 6 to 9, further comprising:
a data replication identifying module stored in the at least one memory and executable by the at least one processor to:
provide data identifying attributes of interest within rules stored in the rule repository to the data replication module.

11. A computer-readable storage medium, having instructions stored thereon, which when executed by at least one processor of a computing device, causes the computing device to:
receive data representative of attributes of a customer of interest;
identify a customer dataset from which to generate a model based at least in part on at least one attribute represented in the received data representative of the attributes of the customer of interest;
segment the identified customer dataset according to a segmentation algorithm, the segmenting dividing customers represented in the identified customer dataset into a plurality of segments;
generate a model for each segment based on attributes common amongst customers within each respective segment and
apply the model generated for each segment to the data representative of the attributes of the customer of interest to identify which segment the customer of interest most closely matches.

12. The computer-readable storage medium of claim 11, with further instructions stored thereon, which when executed by the at least one processor, causes the computing device to:
provide a recommendation to the customer of interest based on the identified segment the customer most closely matches.

13. The computer-readable storage medium of claim 11 or 12, wherein receiving data representative of attributes of the customer interest includes:
receiving a financial services product recommendation request with regard to an identifier of the customer of interest; and
retrieving the data representative of the attributes of the customer of interest from a customer database based at least in part on the identifier of the customer of interest.

14. The computer-readable storage medium of claim 13, wherein the segmentation algorithm is an ABC analysis algorithm, preferably wherein outputting the data representative of the segmented at least one of customers and customer accounts of interest includes storing the data on the at least one memory device.

15. The computer-readable storage medium of any one of claims 11 to 14, with further
instructions stored thereon, which when executed by the at least one processor, causes the computing device to:
identify a product of likely interest to the customer of interest based on the identified segment, the product of likely interest including a variable pricing element;
determine a value for the variable pricing element by:
identifying a second customer dataset from which to generate a second model based at least in part on at least one attribute represented in the received data representative of the attributes of the customer of interest and at least one attribute of the product of interest;
segmenting the identified second customer dataset according to the segmentation algorithm, the segmenting dividing customers of represented in the identified second customer dataset into a plurality of segments;
generating a product pricing model for each segment based on attributes common amongst customers within each respective segment, each segment associated with at least one product of likely interest variable pricing element value;
applying the product pricing model generated for each segment to the data representative of the attributes of the customer of interest to identify which segment the customer of interest most closely matches, the identified segment indicating the variable pricing element value; and
output data representative of the identified product of likely interest and the identified variable pricing element value.
